# FASCICULE DE BREVET EUROPEEN

(11) **EP 2 112 445 B1**
(45) Date de publication et mention de la délivrance du brevet: **31.08.2011**
(21) Numéro de dépôt: 09305343.7
(22) Date de dépôt: 22.04.2009
(51) Int. Cl.: B05B 15/06, F25C 3/04, F16L 27/08

(54) **Structure support de buse(s) pour la production de neige artificielle**
Düsenhalter für die Erzeugung von Kunstschnee
Mounting for snow gun(s)

(30) Priorité: 22.04.2008 FR 0802243
(43) Date de publication de la demande: 28.10.2009
(73) Titulaire: Johnson Controls Neige, 44980 Sainte-luce Sur Loire (FR)
(72) Inventeur: Meneuvrier, Matthieu, 44600, SAINT-NAZAIRE (FR); Jouneau, Pierrick, 44119, TREILLIERES (FR); David, Eric, 44119, TREILLIERES (FR)
(74) Mandataire: Michelet, Alain

(56) Documents cités:
- EP-A- 1 239 242
- WO-A-94/20222
- WO-A-94/23254
- FR-A- 2 715 997
- FR-A- 2 743 872
- US-A- 4 314 670
- US-A- 5 873 525
- US-A1- 2003 089 317

## Description

La présente invention concerne le domaine général de l'enneigement artificiel ; elle concerne plus particulièrement une structure support de buse(s) de pulvérisation, adaptée pour la fabrication de neige artificielle.

Les canons à neige ou enneigeurs sont des dispositifs permettant la fabrication mécanique de neige à partir d'eau, d'air et de basses températures.

Ces enneigeurs se présentent sous des formes très variées, qui déterminent notamment la qualité de la neige obtenue et leur rayon d'action (étendue de la surface « arrosée » en neige artificielle).

Certains enneigeurs se composent de buse(s) de pulvérisation eau/air montée(s) sur une structure support comportant une perche de grande longueur (entre 5 et 15 m) positionnée quasi-verticalement.
Ce type de structure support, décrit par exemple dans le document FR-2 743 872, permet de pulvériser un mélange d'eau et d'air à une grande hauteur par rapport au sol, afin d'obtenir une neige de très bonne qualité et sur un grand rayon d'action.

Ce type de perche support de buse(s) s'avère en pratique relativement sensible aux conditions météorologiques, et surtout au vent.
Pour limiter ce problème, cette perche est habituellement montée sur l'extrémité supérieure d'un piètement ancré au sol, cela par le biais d'une articulation autorisant son pivotement autour d'un axe de rotation horizontal.
Cette articulation permet, de manière classique, de relever plus ou moins la perche par rapport au sol, en tenant compte notamment de la force du vent et de la balistique du jet désiré.

De plus, la ou les buses de pulvérisation sont alimentées en eau et en air par le biais de conduites d'eau et d'air aménagées sur la longueur du piètement et de la perche. Les conduites du piètement se présentent aujourd'hui sous la forme de flexibles, raccordés aux conduites de la perche au niveau de la structure d'articulation précitée, de sorte à pouvoir se déformer en fonction de l'inclinaison appliquée à la perche par rapport au sol.
Or, ces flexibles s'avèrent particulièrement encombrants du fait qu'il convient d'en prévoir une longueur libre suffisante, adaptée pour suivre l'ensemble des mouvements possibles de la perche. De plus ces flexibles se trouvent alors exposés sur une partie de leur longueur ; et il est nécessaire de les démonter l'été pour les protéger (vols, dégradations, rayonnement solaire).

On connaît par ailleurs du document WO-94120222, qui décrit une structure support de base selon le préambule de la revendication 1, un dispositif de pulvérisation d'un mélange air/eau monté à l'extrémité d'une perche de faible hauteur.
Le dispositif de pulvérisation correspondant est très court ; il est monté pivotant autour d'un axe horizontal au niveau duquel les canalisations d'eau et d'air comportent des systèmes de raccordement du type joint tournant. Ce dispositif de pulvérisation, relativement léger est simplement articulé sur le support central qui sert d'articulation. Mais ce type de structure peut difficilement convenir pour des perches de grande longueur et de poids important, nécessitant une grande résistance au niveau de l'articulation.

La demanderesse a donc développé un perfectionnement aux structures supports avec perche de grande longueur, qui a l'intérêt en particulier de remédier aux problèmes d'encombrement et d'exposition précités.

Cette structure support de buse(s) pour la production de neige, selon l'invention, se compose d'une pièce allongée, dont l'une des extrémités reçoit la ou les buses de production de neige et dont l'autre extrémité, dite extrémité inférieure, comporte une articulation autorisant le pivotement de ladite pièce allongée sur l'extrémité supérieure d'un piètement, autour d'un axe de rotation horizontal, et laquelle structure support comporte des conduites agencées sur la longueur dudit piètement et de ladite pièce allongée, pour alimenter en eau et éventuellement en air ladite buse de pulvérisation, lesdites conduites d'eau et éventuellement d'air dudit piètement et de ladite pièce allongée étant raccordées, au niveau de ladite articulation, par le biais de joints tournants tubulaires dont l'axe de rotation s'étend coaxialement par rapport audit axe horizontal de rotation de ladite pièce allongée.
Conformément à l'invention, ladite pièce allongée forme une perche de grande longueur dont l'extrémité inférieure comporte une pièce pivot qui est articulée sur une pièce palier équipant l'extrémité supérieure dudit piètement, ladite pièce pivot se composant - d'un corps fixé sur ladite extrémité inférieure de ladite perche, et - de deux prolongements coaxiaux, disposés de part et d'autre dudit corps, lesquels prolongements forment chacun une partie des joints tournants tubulaires, d'une part, et forment des tourillons portés par le palier du piètement pour assurer le guidage en rotation dudit pivot selon l'axe horizontal de rotation, d'autre part.

Selon une forme de réalisation préférée, la pièce pivot intègre avantageusement au moins une conduite raccord prolongeant la conduite d'eau de la perche, dont l'une des extrémités est reliée à ladite conduite d'eau de ladite perche, et dont l'autre extrémité, formant une partie du joint tournant, débouche latéralement et coaxialement par rapport à l'axe horizontal de rotation de ladite perche pour être raccordée avec l'extrémité supérieure de la conduite d'eau provenant du piètement, formant l'autre partie dudit joint tournant ; le cas échéant, cette pièce pivot intègre également avantageusement au moins une autre conduite raccord prolongeant ladite conduite d'air de la perche, dont l'une des extrémités est reliée à la conduite d'air de ladite perche et dont l'autre extrémité, formant une partie du joint tournant, débouche latéralement et coaxialement par rapport audit axe horizontal de rotation de ladite perche pour être raccordée à l'extrémité supérieure de la conduite d'air provenant du piètement, formant l'autre partie dudit joint tournant.

Les deux prolongements tubulaires comportent avantageusement chacun, d'une part, du côté du corps, une surface annulaire lisse formant tourillon proprement dit qui coopère par glissement avec une surface lisse complémentaire du palier, et d'autre part, à distance dudit corps, une surface annulaire périphérique formant une partie du joint tournant et sur laquelle vient se fixer l'extrémité de l'une des conduites d'eau ou d'air provenant du piètement. Selon une forme possible de réalisation, cette surface annulaire périphérique des prolongements tubulaires comporte une gorge annulaire pour permettre le verrouillage par un système de clavetage transverse en U de l'extrémité dédiée de l'une des conduites d'eau ou d'air précitées.
De même, le palier équipant le piètement se présente avantageusement sous la forme d'un étrier en U comportant deux platines latérales parallèles, comportant chacune une encoche verticale en forme générale de U, ouverte vers le haut, dont la partie de fond constitue une surface lisse recevant la surface tourillon de l'un des prolongements tubulaires ; les platines latérales sont encore équipées d'organes de verrouillage aptes à être manoeuvrés entre - une position d'obturation desdites encoches en U pour le verrouillage en position de la pièce pivot et - une position escamotée dans laquelle lesdites encoches sont ouvertes pour autoriser le montage/démontage du pivot.

Toujours dans le cas d'une structure support munie de conduites d'alimentation en air et en eau, la perche intègre avantageusement deux conduites tubulaires coaxiales réalisées monobloc : une conduite centrale pour la circulation de l'air sous pression, s'étendant coaxialement au sein d'une conduite périphérique délimitant avec ladite conduite centrale un volume pour la circulation d'eau ; la pièce pivot intègre quant à elle avantageusement, d'une part, une conduite raccord d'air de forme générale tubulaire qui s'étend entre les conduites d'air du piètement et de la perche, et d'autre part, une conduite raccord d'eau en forme de chambre dans laquelle s'étend la conduite raccord d'air et qui s'étend entre lesdites conduites d'eau du piètement et de la perche. La conduite d'eau enveloppe ainsi la conduite d'air à un endroit où la condensation risque de geler dans l'air.

Selon une caractéristique additionnelle, l'articulation entre la perche et le piètement est avantageusement recouverte d'un carénage réalisé en matériau thermoplastique, assurant en particulier la couverture de la portion supérieure de la ou des conduites du piètement raccordées par le ou les joints tournants à la pièce pivot.

L'invention sera encore illustrée, sans être aucunement limitée, par la description suivante d'une forme de réalisation possible d'une structure support d'enneigeur, cela en relation avec les dessins annexés dans lesquels :
- la figure 1 est une vue d'une partie de la structure support conforme à l'invention, montrant son piètement et une partie de sa perche associée, cela selon une perspective orientée du côté opposé au vérin de manoeuvre de ladite perche ;
- la figure 2 correspond à la structure support représentée sur la figure 1, avec une perspective ici orientée du côté du vérin de manoeuvre de la perche ;
- la figure 3 montre, de manière agrandie, l'articulation de la structure support sans l'élément de carénage, du côté opposé au vérin de manoeuvre de la perche ;
- la figure 4 montre également l'articulation sans son élément de carénage, du côté du vérin de manoeuvre de la perche ;
- la figure 5 montre, de manière éclatée, l'articulation particulière prévue entre la perche et le piètement ;
- la figure 6 est encore une vue de la pièce pivot équipant l'extrémité arrière de la perche, avec l'un de ses prolongements tubulaires illustré libéré de sa conduite d'alimentation ;
- la figure 7 est une vue schématique en coupe de la pièce pivot équipant l'extrémité arrière de la perche, de sorte à montrer la structure de ses conduites raccords ;
- la figure 8 montre, désolidarisés l'un de l'autre et en perspective, le pivot et l'extrémité arrière de la perche ;
- la figure 9 est une vue en coupe qui montre la structure interne de la perche représentée sur les figures 1 et 2.

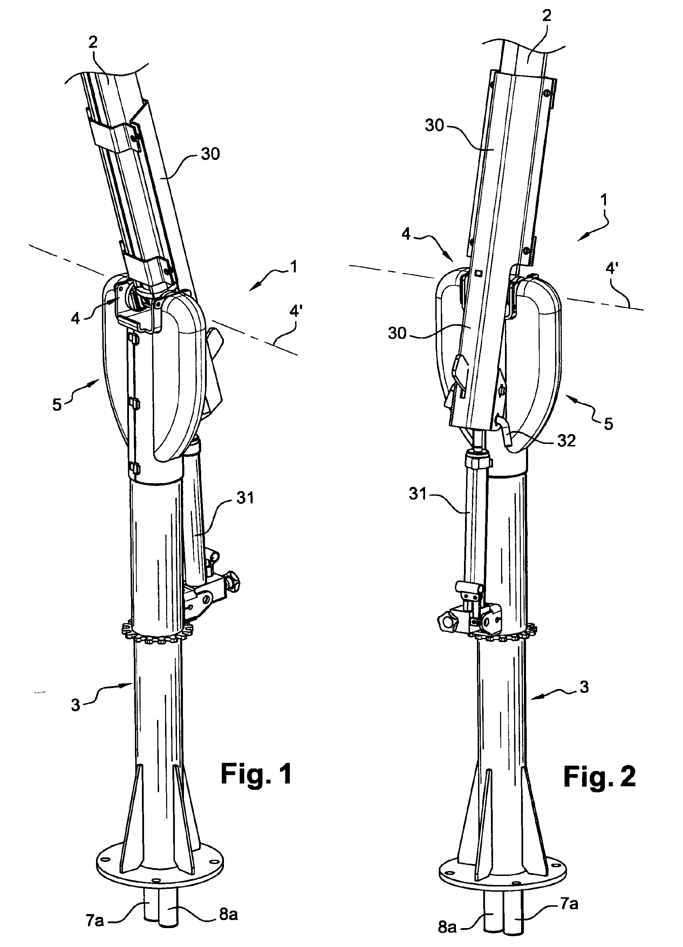

La structure support 1, représentée en perspective et partiellement sur les figures 1 et 2, est destinée à porter une ou plusieurs buses de pulvérisation (non représentée(s)) en hauteur au-dessus du sol, pour projeter un mélange d'eau et d'air sous pression apte générer un enneigement artificiel.
Ce type de structure support 1 est décrit à titre d'exemple dans le document FR-2 743 872.

Ce type d'enneigeur (structure support/buse(s) de production de neige) va en particulier faire partie, le plus souvent avec d'autres enneigeurs identiques ou similaires, d'une installation complète d'enneigement destinée à être implantée en bordure de la surface à enneiger, en particulier une piste de ski.

En l'occurrence, comme représenté sur les figures 1 et 2, cette structure support 1 se compose d'une pièce allongée rigide 2, en forme de perche, dont l'extrémité supérieure (non représentée) reçoit la ou les buses de production de neige (non représentée(s)) et dont l'extrémité opposée inférieure est portée par un piètement 3 ancré au sol.
Une articulation 4, décrite plus en détails par la suite, est prévue entre la perche 2 et le piètement 3, cela de sorte à autoriser le pivotement de ladite perche 2 autour d'un axe de rotation horizontal 4'. Cette articulation 4 est ici protégée par une pièce de carénage rapportée 5, réalisée en matériau thermoplastique (par exemple en polyéthylène).

Plus précisément, la pièce allongée 2 se présente ici sous la forme d'une perche de grande longueur (entre 5 et 15 m), qui une fois relevée permet à la ou aux buses de pulvériser un mélange d'eau et d'air à une grande hauteur par rapport au sol.

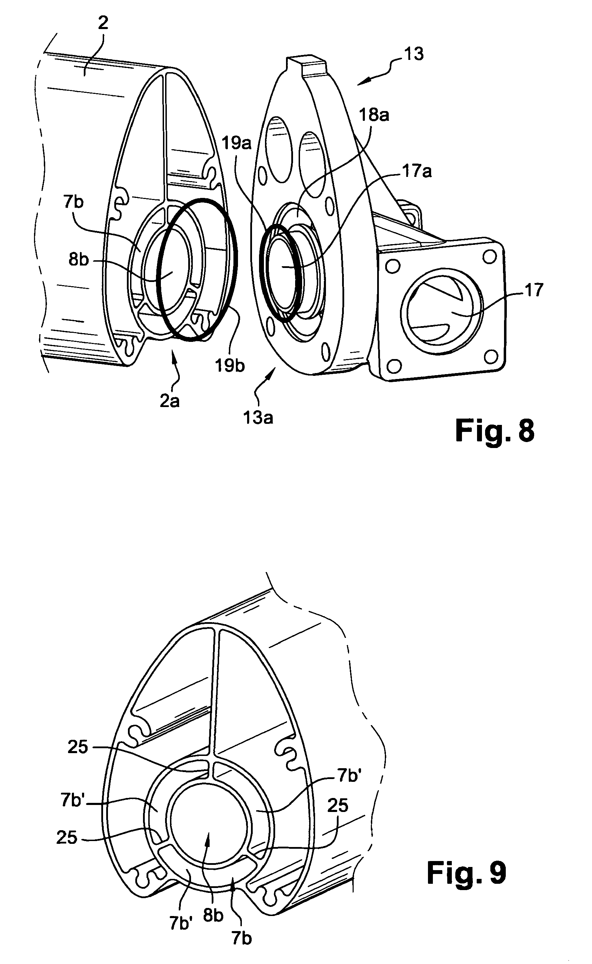

Cette pièce allongée 2, réalisée en matériau léger du genre aluminium ou alliage d'aluminium, est obtenue par exemple par filage.
Comme abordé par la suite en relation avec la figure 9, cette opération de filage de la perche permet notamment de générer une pièce monobloc, avec des conduites pour l'eau et pour l'air directement intégrées.

Le piètement 3 se compose quant à lui d'une pièce tubulaire métallique dont l'extrémité supérieure reçoit la perche 2 via l'articulation 4, et dont l'extrémité inférieure est ancrée au sol, par exemple sur un abri qui renferme les moyens techniques de gestion de l'alimentation en eau et en air de l'enneigeur.

Cette structure support 1 est encore pourvue d'un ensemble de conduites 7, 8 pour assurer le cheminement de l'eau et de l'air sous pression, depuis l'abri précité jusqu'aux buses.
Ces conduites d'alimentation en eau 7 et en air 8 (détaillées par la suite) sont ménagées, pour une partie 7a, 8a sur la longueur du piètement 3, et pour une autre partie 7b, 8b sur la longueur de la perche 2.

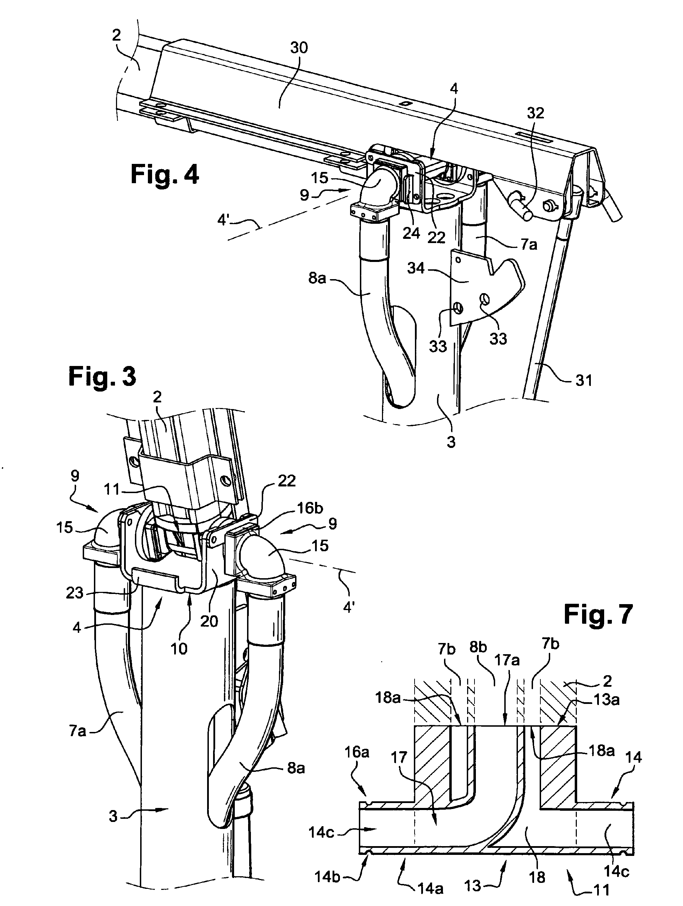

Conformément à l'invention, les deux parties 7a, 7b des conduites d'eau 7, et aussi les deux parties 8a, 8b des conduites d'air 8, sont raccordées l'une à l'autre au niveau de l'articulation 4, par le biais chacune d'un joint tournant 9 (les deux joints tournants 9 sont visibles en particulier sur les figures 3 à 6, où le carénage 5 a été retiré). Cette jonction des deux parties de conduites 7a, 7b et 8a, 8b par joints tournants 9, au niveau de l'articulation 4, confère à la structure support un caractère compact au niveau de cette articulation 4 ; ces joints tournants 9 suppriment également de nombreux problèmes de montage et de maintenance au niveau de la jonction entre les parties piètement et perche des conduites d'eau 7 et d'air 8, tels que le démontage des flexibles.

Dans la présente forme de réalisation, l'articulation 4, détaillée ci-dessous en relation avec les figures 3 à 6, se compose - d'une pièce formant palier 10 qui équipe l'extrémité supérieure du piètement 3, et - d'une pièce formant pivot 11 qui équipe l'extrémité inférieure de la perche 2.
Ces deux pièces 10, 11 sont destinées à coopérer de sorte à autoriser la rotation du pivot 11 (et donc de la perche associée 2) autour de l'axe horizontal de rotation 4' précité.

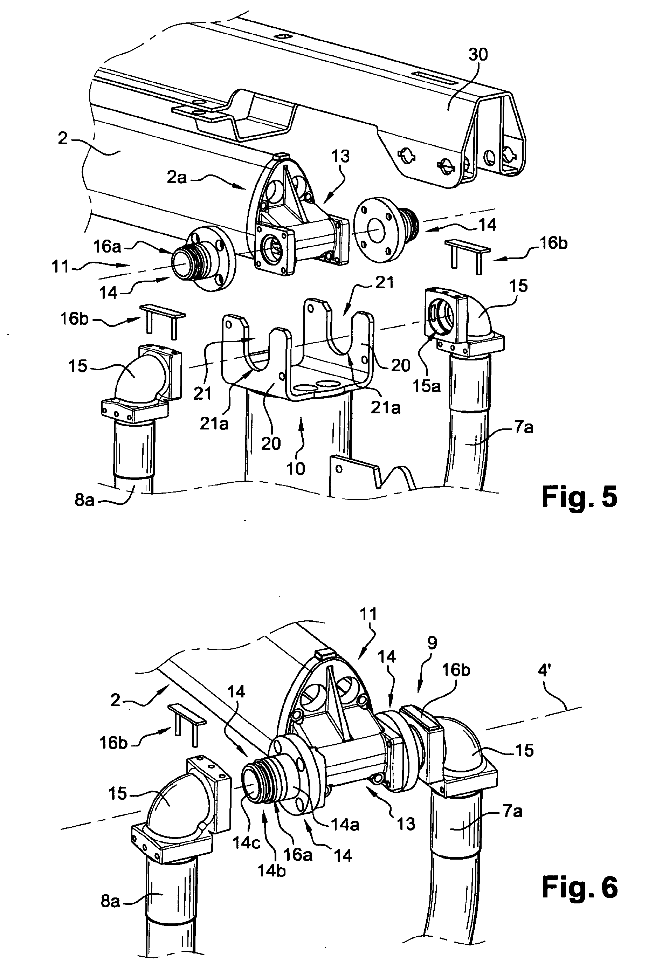

Le pivot 11, représenté en particulier sur les figures 5 et 6, se compose - d'un corps 13 venant dans le prolongement de la perche 2 et dont la face frontale 13a est fixée sur l'extrémité inférieure 2a de cette perche 2, et - de deux prolongements tubulaires coaxiaux 14, rapportés de part et d'autre dudit corps 13 (par exemple par boulonnage) pour former notamment une partie des joints tournants 9 précités.

Comme illustré figure 6, chaque prolongement tubulaire 14 comporte deux parties :
- d'une part, du côté du corps 13, une surface annulaire lisse 14a, formant tourillon, qui est destinée à être portée par le palier 10 du piètement 3 de sorte à guider en rotation le pivot 11 autour de l'axe horizontal de rotation 4', et
- d'autre part, à distance du corps 13 et du côté de son extrémité libre, une surface annulaire périphérique 14b, formant la partie mobile de l'un des joints tournants 9, avec laquelle vient coopérer l'extrémité supérieure 15 de l'une des conduites 7a, 8a du piètement 3, formant la partie fixe de ce même joint tournant 9.

Chaque prolongement tubulaire 14 délimite encore un orifice central cylindrique 14c, dans lequel va circuler l'eau ou l'air (selon le cas) provenant de la conduite 7a, 8a associée. Les deux orifices 14c sont coaxiaux, et ils comportent chacun une ouverture débouchante extérieure, orientées à l'opposé l'une de l'autre.

Ces prolongements tubulaires 14 remplissent ainsi une triple fonction : tourillon, partie de joint tournant et tronçon de conduite air/eau.

L'extrémité supérieure 15 des conduites de piètement 7a, 8a se présente ici sous la forme d'une pièce raccord coudée à 90°, distincte du palier 10 ; ces coudes 15 équipent le tronçon supérieur flexible de l'une des conduites 7a, 8a. On notera que ce tronçon supérieur des conduites 7a et 8a s'étend extérieurement au piètement 3, et prolonge un tronçon « amont » intérieur intégré au sein de ce piètement tubulaire 3. L'ouverture débouchante 15a de ces coudes 15 (visible figure 5) vient s'emmancher, au jeu près, autour de la surface annulaire périphérique 14b de l'un des prolongements tubulaires 14 du pivot 11. Ces coudes 15 viennent alors de part et d'autre du pivot 11, et leurs ouvertures débouchantes 15a sont orientées l'une vers l'autre, centrés sur l'axe 4'.

La surface annulaire périphérique 14b des prolongements tubulaires 14 comporte encore une gorge annulaire 16a pour le verrouillage, par un système de clavetage transverse en U rapporté 16b, du coude raccord 15 associé. Ces éléments associés forment alors les joints tournants 9, de part et d'autre du pivot 11.
Ce système de verrouillage 16a, 16b permet de bloquer les pièces associées en translation, tout en autorisant un degré de liberté en rotation des prolongements tubulaires 14 par rapport aux coudes raccords 15, cela selon l'axe d'articulation 4'.
Un tel système de clavetage transverse en U 16a, 16b est par exemple décrit en détail dans le document EP-1 239 242.

Comme représenté sur la figure 7, le corps 13 du pivot 11 intègre quant à lui des conduites raccords 17, 18 pour le passage de l'air et de l'eau depuis les conduites 7a, 8a du piètement 3 vers les conduites 7b, 8b de la perche 2.

Ces conduites raccords d'air 17 et d'eau 18 sont ici agencées pour former ensemble une sorte de raccord en T, apte à connecter les alimentations latérales en eau et en air avec deux sorties concentriques d'eau et d'air correspondant à l'agencement des conduites 7b, 8b de la perche 2 (comme décrit ci-après en relation avec les figures 8 et 9).

Pour cela, l'orifice 14c du prolongement tubulaire 14 recevant l'air sous pression (à gauche sur la figure 7) se poursuit ici par un raccord tubulaire coudé 17 jusqu'à une sortie centrale 17a ménagée dans la face frontale 13a du corps 13.
L'orifice 14c de l'autre prolongement tubulaire 14 du pivot 11, recevant l'eau sous pression (à droite sur la figure 7), se prolonge par un raccord 18 en forme de chambre coudée dans laquelle s'étend le raccord d'air 17. Ce raccord d'eau 18 débouche au niveau d'une ouverture annulaire 18a du côté de la face frontale 13a du corps 13, autour et de manière concentrique par rapport à l'ouverture circulaire 17a du raccord d'air 17.

D'autre part, comme représenté en particulier sur la figure 5, le palier 10 recevant le pivot 11 se présente sous la forme générale d'un étrier en U.

Ce palier 10 comporte en particulier deux platines latérales 20, parallèles et à distance l'une de l'autre, dans chacune desquelles est ménagée une encoche 21 en forme générale de U, orientée verticalement et débouchant au niveau de la bordure supérieure desdites platines.
La partie inférieure 21a de ces encoches 21 est lisse et en forme générale d'arc de cercle ; le diamètre de cette partie inférieure 21a correspond, au jeu près, à celui de la surface tourillon 14a des prolongements tubulaires 14 du pivot 11.
Comme précisé par la suite, les prolongements tubulaires 14 du pivot 11 sont introduits dans ces encoches 21 de sorte que leurs surfaces tourillons 14a viennent reposer, par contact direct, sur les parties inférieures 21a des encoches 21, formant berceau ; ces surfaces de contacts circulaires assurent le guidage en rotation du pivot 11, au sein du palier 10, autour de l'axe d'articulation 4'.

Le palier 10 comporte encore différents éléments structurels visant à optimiser le fonctionnement général de l'articulation 4.
En l'occurrence, les platines latérales 20 sont chacune équipées d'un loquet pivotant 22 (visible en particulier sur les figures 3 et 4) qui est apte à être manoeuvré entre - une position d'obturation des encoches 21 pour le verrouillage en position de la pièce pivot 11 sur le palier 10, et - une position escamotée dans laquelle lesdites encoches 21 sont ouvertes pour autoriser le montage/démontage du pivot 11.
Le palier 10 est encore équipé d'une languette 23, s'étendant vers le haut à partir du volet inférieur reliant les deux platines latérales 20. Cette languette 23 constitue une butée de fin de course, sur laquelle la perche 2 vient prendre appui dans une position horizontale ou quasi horizontale.
La face extérieure des platines 20 est ici encore munie d'une languette saillante 24 (visible sur la figure 4), en particulier prévue pour coopérer avec les coudes 15 des conduites d'eau 7a et d'air 8a du piètement 3, pour assurer leur blocage et empêcher leur rotation lors de la manoeuvre de la perche 2.

D'autre part, la structure générale de la perche 2 (et en particulier de ses conduites d'eau 7b et d'air 8b) est représentée sur les figures 8 et 9.

Cette perche 2 intègre en particulier deux conduites monoblocs : l'une centrale 8b, délimitant un volume cylindrique, dans laquelle va circuler l'air sous pression, et l'autre périphérique 7b, s'étendant coaxialement et autour de la conduite centrale 8b pour délimiter avec cette dernière un volume annulaire dans laquelle circule l'eau sous pression.
L'agencement de la conduite d'air 8b au sein de la conduite d'eau 7b a l'intérêt de favoriser le réchauffage de l'air et d'éviter le gel des condensats contenus dans l'air.
La face inférieure de la conduite annulaire 7b est ici partiellement exposée en surface et au retour de neige pour favoriser la fonte.

Lors du montage du pivot 11, les conduites d'eau 7b et d'air 8b de la perche 2 sont raccordées, de manière étanche par des joints annulaires 19a et 19b, avec respectivement les ouvertures débouchantes 18a et 17a des raccords d'eau 18 et d'air 17 intégrés dans le pivot 11 ; ces conduites de perche 7b, 8b se prolongent ainsi par le biais des raccords 18 et 17 au sein du pivot 11, jusqu'aux prolongements tubulaires 14.

Pour être complet, la structure support 1 comporte un ensemble d'éléments structurels pour la manoeuvre de la perche 2 et son maintien en position verticale ou quasi-verticale.

En particulier, la perche 2 est équipée d'une rallonge rapportée 30, en forme générale de manchette, similaire à celle décrite dans le document FR-2 743 872.

Cette rallonge 30 est solidarisée avec un tronçon de la perche 2 et s'étend en porte-à-faux et au-delà de l'articulation 4 de la perche 2.
Cette rallonge 30 est, d'une part, reliée au piètement 3 par un vérin de manoeuvre 31 pour dresser la perche 2 et positionner l'enneigeur associé en hauteur ; ce vérin est par exemple piloté au moyen d'une pompe manuelle ou motorisée.
Cette rallonge 30 reçoit ici encore une cheville 32, pour le verrouillage en position relevée de la perche 2. Cette cheville 32 vient pour cela se loger au travers de l'un des orifices 33 ménagés dans une platine saillante 34 équipant le piètement 3. Ces orifices 33, ici au nombre de deux, sont positionnés de sorte à autoriser un verrouillage de la perche 2 selon un angle de 15° ou 30° par rapport à la verticale ; on peut ainsi adapter le relevage de la perche 2 en fonction des conditions de vent et de la balistique du jet désiré.

En pratique, le palier 10 et le pivot 11 sont montés respectivement sur le piètement 3 et la perche 2.
Le pivot 11, avec sa perche 2 associée, est ensuite rapporté sur le palier 10, entre ses deux platines latérales 20, cela tout en veillant à introduire ses prolongements tubulaires 14 au travers des encoches 21 jusqu'à ce que les surfaces tourillons 14a reposent dans le fond 21a de ces encoches 21.

Le pivot 11 étant en place sur le palier 10 et verrouillé par les organes pivotants 22, les coudes raccords 15 des conduites 7a, 8a du piètement 3 peuvent être emmanchés et fixés de part et d'autre du pivot 11, sur les surfaces périphériques 14b de ses prolongements tubulaires 14 qui se trouvent alors en saillie vers l'extérieur par rapport aux platines de réception 20.

Le montage se termine par la mise en place du carénage 5 et de la rallonge 30, avant de rapporter le vérin de manoeuvre 31.

L'opérateur peut alors manoeuvrer la perche 2 autour de son axe horizontal d'articulation 4', par une action sur le vérin 31.
Lors de cette manoeuvre, les prolongements tubulaires 14 du pivot 11 tournent dans leurs encoches 21 respectives, autour de l'axe d'articulation 4'. Ces prolongements 14 tournent aussi par rapport aux coudes 15 associés qui restent fixes, également selon l'axe d'articulation 4' ; en d'autres termes, l'axe de rotation des joints tournants 9 est coaxial par rapport à l'axe d'articulation 4'.

Une fois convenablement relevée, la perche 2 est verrouillée par le positionnement de la goupille 32 entre la rallonge 30 et la platine de verrouillage 34. L'enneigeur peut être alimenté en eau et en air sous pression, pour produire la quantité souhaitée de neige artificielle.

La structure support 1 conforme à l'invention a l'intérêt de permettre un raccord optimal entre les conduites du piètement et de la perche, qui présente un encombrement extrêmement réduit.

## Revendications

1. Structure support de buse(s) de pulvérisation pour la production de neige, laquelle structure support (1) se compose d'une pièce allongée (2), dont l'une des extrémités reçoit ladite ou lesdites buses de pulvérisation et dont l'autre extrémité (2a), dite extrémité inférieure, comporte une articulation (4) autorisant le pivotement de ladite pièce allongée (2) sur l'extrémité supérieure d'un piètement (3), autour d'un axe de rotation horizontal (4'), et laquelle structure support (1) comporte des conduites (7a, 7b ; 8a, 8b) agencées sur la longueur dudit piètement (3) et de ladite pièce allongée (2) pour alimenter en eau et éventuellement en air ladite buse de pulvérisation, lesdites conduites d'eau (7a, 7b) et éventuellement d'air (8a, 8b) dudit piètement (3) et de ladite pièce allongée (2) étant raccordées, au niveau de ladite articulation (4), par le biais de joints tournants tubulaires (9) dont l'axe de rotation (4') s'étend coaxialement par rapport audit axe horizontal de rotation (4') de ladite pièce allongée (2), **caractérisée en ce que** ladite pièce allongée (2) forme une perche de grande longueur dont l'extrémité inférieure (2a) comporte une pièce pivot (11) qui est articulée sur une pièce palier (10) équipant l'extrémité supérieure dudit piètement (3), ladite pièce pivot (11) se composant - d'un corps (13) fixé sur ladite extrémité inférieure (2a) de ladite perche (2) et - de deux prolongements tubulaires coaxiaux (14), disposés de part et d'autre dudit corps (13), lesquels protongements tubulaires (14) forment chacun une partie des joints tournants tubulaires (9), d'une < part, et forment des tourillons portés par le palier (10) du piètement (3) pour assurer le guidage en rotation dudit pivot (11) selon l'axe horizontal de rotation (4'), d'autre part.

2. Structure support de buse(s) de pulvérisation selon la revendication 1, **caractérisée en ce que** la pièce pivot (11) de la perche (2) intègre au moins une conduite raccord (18) prolongeant la conduite d'eau (7b) de la perche (2), dont l'une des extrémités (18a) est reliée à ladite conduite d'eau (7b) de ladite perche (2), et dont l'autre extrémité (14c), formant une partie du joint tournant (9), débouche latéralement et coaxialement par rapport à l'axe horizontal de rotation (4') de ladite perche (2) pour être raccordée avec l'extrémité supérieure (15) de la conduite d'eau (7a) provenant du piètement (3), formant l'autre partie dudit joint tournant (9), laquelle pièce pivot (11) intègre également, le cas échéant, au moins un autre raccord (17) prolongeant ladite conduite d'air (8b) de la perche (2), dont l'une des extrémités (17a) est reliée à la conduite d'air (8b) de ladite perche (2) et dont l'autre extrémité (14c), formant une partie du joint tournant (9), débouche latéralement et coaxialement par rapport audit axe horizontal de rotation (4') de ladite perche (2) pour être raccordée à l'extrémité supérieure (15) de la conduite d'air (8a) provenant du piètement (3), formant l'autre partie dudit joint tournant (9).

3. Structure support de buse(s) de pulvérisation selon l'une quelconque des revendications 1 ou 2, **caractérisée en ce que** les deux prolongements tubulaires (14) comportent chacun, d'une part, du côté du corps (13), une surface annulaire lisse (14a) formant tourillon qui coopère par glissement avec une surface lisse complémentaire (21a) du palier (10), et d'autre part, à distance dudit corps (13), une surface annulaire périphérique (14b) formant une partie du joint tournant (9) et sur laquelle vient se fixer l'extrémité (15) de l'une des conduites d'eau (7a) ou d'air (8a) provenant du piètement (3).

4. Structure support de buse(s) de pulvérisation selon la revendication 3, **caractérisée en ce que** la surface annulaire périphérique (14b) des prolongements tubulaires (14) comporte une gorge annulaire pour permettre le verrouillage par un système de clavetage transverse en U de l'extrémité dédiée (15) de l'une des conduites d'eau (7a) ou d'air (8a) provenant du piètement (3).

5. Structure support de buse(s) de pulvérisation selon l'une quelconque des revendications 3 ou 4, **caractérisée en ce que** le palier (10) équipant le piètement se présente sous la forme d'un étrier en U comportant deux platines latérales parallèles (20), lesdites platines (20) comportant chacune une encoche verticale (21) en forme générale de U, ouvert vers le haut, dont la partie de fond (21a) constitue les surfaces lisses recevant la surface tourillon (14a) des prolongements tubulaires (14), lesdites platines latérales (20) étant encore équipées d'organes de verrouillage (22) aptes à être manoeuvrés entre - une position d'obturation des encoches (21) pour le verrouillage en position de la pièce pivot (11) et - une position escamotée dans laquelle lesdites encoches (21) sont ouvertes pour autoriser le montage/démontage du pivot (11).

6. Structure support de buse(s) de pulvérisation selon l'une quelconque des revendications 1 à 5, **caractérisée en ce que** la perche (2) intègre deux conduites tubulaires coaxiales réalisées monobloc : une conduite centrale (8b) pour la circulation de l'air sous pression, s'étendant coaxialement et au sein d'une conduite périphérique (7b) délimitant avec ladite conduite centrale (8b) un volume pour la circulation d'eau, et **en ce que** la pièce pivot (11) intègre, d'une part, une conduite raccord d'air (17) de forme générale tubulaire qui s'étend entre les conduites d'air (8a, 8b) du piètement et de la perche, et d'autre part, une conduite raccord d'eau (18) en forme de chambre dans laquelle s'étend ledit raccord d'air (17) et qui s'étend entre lesdites conduites d'eau (7a, 7b) du piètement et de la perche.

7. Structure support de buse(s) de pulvérisation selon l'une quelconque des revendications 1 à 6, **caractérisée en ce que** l'articulation (4) entre la perche (2) et le piètement (3) est recouverte d'un carénage (5) réalisé en matériau thermoplastique, assurant en particulier la couverture de la portion supérieure de la ou des conduites (7a, 8a) du piètement (3) raccordées par les joints tournants (9) à la pièce pivot (11).

## Claims

1. A support structure of spray nozzle(s) for snow production, wherein said support structure (1) consists of an elongated part (2), one end of which receives said spray nozzle(s) and the other end of which (2a), referred to as the lower end, comprises a hinge (4) for the swivelling of said elongated part (2) on the upper end of a base (3), around a horizontal axis of rotation (4'), and said support structure (1) composes ducts (7a, 7b ; 8a, 8b) arranged along the length of said base (3) and of said elongated part (2) for feeding water and possibly air to said spray nozzle, said water ducts (7a, 7b) and possibly air ducts (8a, 8b) of said base (3) and of said elongated part (2) being connected together, at said hinge (4), by means of tubular rotating joints (9), the axis of rotation (4') of which extends coaxially to said horizontal axis of rotation (4') of said elongated part (2), **characterized in that** said elongated part (2) forms a very long pole, the lower end (2a) of which comprises a pivot part (11) that is articulated on a bearing part (10) mounted on the upper end of said base (3), said pivot part (11) consisting of - a body (13) fixed to said lower end (2a) of said pole (2) ant - two coaxial tubular extensions (14), arranged on either side of said body (13), said tubular extensions (14) each forming, on the one hand, a part of the tubular rotating joints (9) and, on the other hand, journals supported by the bearing (10) of the base (3) to ensure the rotational guiding of said pivot (11) according to the horizontal axis of rotation (4').

2. A support structure of spray nozzle(s) according to claim 1, **characterized in that** the pivot part (11) of the pole (2) integrates at least one connection duct (18) extending the water duct (7b) of the pole (2), one end (18a) of which is connected to said water duct (7b) of said pole (2), and the other end (14c) of which, forming a part of the rotating joint (9), opens laterally and coaxially to the horizontal axis of rotation (4') of said pole (2), so as to be connected to the upper end (15) of the water duct (7a) coming from the base (3), forming the other part of said rotating joint (9), said pivot part (11) also integrates, if need be, at least one other connector (17) extending said air duct (8b) of said pole (2), one end (17a) of which is connected to the air duct (8b) of said pole (2) and the other end (14c) of which, forming a part of the rotating joint (9), opens laterally and coaxially to said horizontal axis of rotation (4') of said pole (2), so as to be connected to the upper end (15) of the air duct (8a) coming from the base (3), forming the other part of said rotating joint (9).

3. A support structure of spray nozzle(s) according to any one of claims 1 or 2, **characterized in that** the two tubular extensions (14) each comprise, on the one hand, on the side of the body (13), a smooth annular surface (14a) forming a journal that slidingly cooperates with a complementary smooth surface (21a) of the bearing (10), and on the other hand, at distance from said body (13), a peripheral annular surface (14b) forming a part of the rotating joint (9) and onto which the end (15) of one of the water (7a) or air (8a) ducts coming from the base (3) is fixed.

4. A support structure of spray nozzle(s) according to claim 3, **characterized in that** the peripheral annular surface (14b) of the tubular extensions (14) comprises an annular groove for the locking by a U-shaped transverse keying system of the dedicated end (15) of one of the water (7a) or air (8a) ducts coming from the base (3).

5. A support structure of spray nozzle(s) according to any one of claims 3 or 4, **characterized in that** the bearing (10) mounted on the base is in the form of a U-shaped stirrup comprising two parallel side plates (20), said plates (20) each comprising a generally U-shaped upwardly opened vertical notch (21), the bottom part (21a) forms the smooth surfaces receiving the journal surface (14a) of the tubular extensions (14), said side plates (20) being further equipped with locking elements (22) adapted to be operated between - a position for blocking the notches (21), for locking the pivot part (11) in position, and - a retracted position in which said notches (21) are open to allow the assembly/disassembly of the pivot (11).

6. A support structure of spray nozzle(s) according to any one of claims 1 to 5, **characterized in that** the pole (2) integrates two coaxial tubular ducts made single-piece: a central duct (8b) for the circulation of air under pressure, extending coaxially to and within a peripheral duct (7b), delimiting with said central duct (8b) a volume for the circulation of water, and **in that** the pivot part (11) integrates, on the one hand, a generally tubular-shaped air connector duct (17) that extends between the air ducts (8a, 8b) of the base and of the pole, and on the other hand, a water connection duct (18) in the form of a chamber in which said air connector (17) extends and which extends between said water ducts (7a, 7b) of the base and of the pole.

7. A support structure of spray nozzle(s) according to any one of claims 1 to 6, **characterized in that** the hinge (4) between the pole (2) and the base (3) is covered with a shielding (5) made of thermoplastic material, covering in particular the upper portion of the duct(s) (7a, 8a) of the base (3) connected by the rotating joints (9) to the pivot part (11).

## Patentansprüche

1. Stützkonstruktion für eine Sprühdüse (für Sprühdüsen) zur Herstellung von Schnee, wobei die Stützkonstruktion (1) aus einem langgestreckten Teil (2) besteht, dessen eines Ende die Sprühdüse oder die Sprühdüsen aufnimmt und dessen anderes Ende (2a), das als "unteres Ende" bezeichnet wird, ein Gesenk (4) aufweist, das die Schwenkung des langgestreckten Teiles (2) auf dem oberen Ende eines Fußes (3) um eine horizontale Drehachse (4') errnöglicht, und wobei die Stützkonstruktion (1) Leitungen (7a, 7b; 8a, 8b) aufweist, die entlang der Länge des Fußes (3) und des langgestreckten Teiles (2) ungeordnet sind, um der Sprühdose Wasser und eventuell Luft zuzuführen, wobei die Wasserleitungen (7a, 7b) und eventuell vorgesehenen Luftleitungen (8a, 8b) des Fußes (3) und des langgestreckten Teiles (2) im Bereich des Gelenks (4) über Rohrdrehverbindungen (9) angeschlossen sind, deren Drehachse (4) sich koaxial mit der horizontalen Drehachse (4') des langgestreckten Teiles (2) erstreckt, **dadurch** gekennzeichet, dass das langgestreckte Teil (2) eine Stange von großer Länge bildes, deren unteres Ende (2a) ein Schwenkteil (11) aufweist, weiches auf einem Lagerteil (10) angelenkt ist, mit dem das obere Ende des Fußes (3) ausgestattet ist, wobei das Schwenkteil (11) aus einem Körper (13), der an dem unteren Ende (2a) der Stange (2) befestigt ist, und - aus zwei koaxialen rohrförmigen Verlängerungen (14), die beiderseits des Körpers (13) angeordnet sind, besteht, wobei die rohrförmigen Verlängerungen (14) jeweils einerseits einen Teil der Rohrdrehverbindungen (9) bilden und andererseits von dem Lager (10) des Fußes (3) getragene Lagerzapfen bilde, um die Drehführung des Schwenktet (11) entlang der horizontalen Drehachse (4') zu gewährleisten.

2. Stützkonstruktion für eine Sprühdüse (für Sprühdüsen) nach Anspruch 1, **dadurch gekennzeichnet, dass** in das Schwenkteil (11) der Stange (2) mindestens eine die Wasserleitung (7b) verlängernde Anschlussleitung (18) integriert ist, deren eines Ende (18a) mit der Wasserleitung (7b) der Stange (2) verbunden ist und deren anderes Ende (14c), das einen Teil der Drehverbindung (9) bildet, seitlich und koaxial bezüglich der horizontalen Drehachse (4') der Stange (2) mündet, um an das obere Ende (15) der von dem Fuß (3) kommenden Wasserleitung (7a) abgeschossen zu werden, das den anderen Teil der Drehverbindung (9) bildet, wobei in das Schwenkteil (11) gegebenenfalls auch mindestens ein weiteres, die Luftleitung (8b) der Stange (2) vertängerndes Anschlussstück (17) integriert ist, dessen eines Ende (17a) mit der Luftleitung (8b) der Stange (2) verbunden ist und dessen anderes Ende (14c), das einen Teil der Drehverbindung (9) bildet, seitlich und koaxial bezüglich der horizontalen Drehachse (4') der Stange (2) mündet, um an das obere Ende (15) der von dem Fuß (3) kommenden Luftleitung (8a) angeschlossen zu werden, das den anderen Teil der Drehverbindung (9) bildet.

3. Stützkonstruktion für eine Sprühdüse (für Sprühdüsen) noch einem der Ansprüche 1 oder 2, **dadurch** gekennzeichet, dass die zwei rohrförmigen Verlängerungen (14) jeweils einerseits, auf der Seite des Körpers (13), eine glatte Ringfläche (14a), die einen. Lagerzapfen bildet, aufweist, reiche gleitend mit einer komplementären glatten Fläche (21a) des Lagers (10) zusammenwirkt, und andererseits, in einem Abstand von dem Körper (13), eine Umfangsringflöche (14b), die einen Teil der Drehverbindung (9) bildet und auf weicher das Ende (15) einer von der Wasserleitung (7a) oder der Luftleitung (8a), die von dem Fuß (3) kommt, befestigbar ist.

4. Stützkonstruktion für eine Sprühdüse (für Sprühdüse) nach Anspruch 3, **dadurch gekennzeichnet, dass** die Umfangsringfläche (14b) der rohrförmigen Verlängerungen (14) eine Ringnut aufweist, um die Verriegelung des dafür vorgesehenen Endes (15) einer von der Wasserleitung (7a) oder der Luftleitung (8a), die von dem Fuß (3) kommt, durch ein System der Querverkeilung in U-Form zu ermöglichen.

5. Stützkonstruktion für eine Sprühdüse (für Sprühdüsen) nach einem der Ansprüche 3 oder 4, **dadurch gekennzeichnet, dass** das Lager (10), mit dem der Fuß ausgestattet ist, die Gestalt eines U-förmigen Bügels aufweiset, der zwei parallele seitliche Platten (20) aufweist, wobei die Platten (20) jeweils eine allgemein U-förmige vertikale Aussparung (21) aufweisen, die nach oben hin offen ist und deren Bodenteil (21a) die glatten Flächen bildet, welche die Lagerzapfenfläche (14a) der rohrförmigen Verlängerungen (14) aufnehmen, wobei die seitlichen Platten (20) außerdem mit Verriegelungselementen (22) ausgestattet sind, die geeignet sind, zwischen einer Position des Verschließens der Aussparungen (21) zur Verriegelung des Schwenkteils (11) in seiner Position und - einer hochgeklappten Position, in welcher die Aussparungen (21) offen sind, um die Montage/Demontage des Schwenkteils (11) zu ermöglichen, verstellt zu werden.

6. Stützkonstruktion für eine Sprühdüse (für Sprühdüsen) nach einem der Ansprüche 1 bis 5, **dadurch gekennzeichnet dass** in die Stange (2) zwei koaxiale Rohrleitungen integriert sind, die aus einem Stück hergestellt sind: eine zentrale Leitung (8b) für die Zirkulation von Druckluft, die sich koaxial zu einer Umfangsleitung (7b) und in deren Innerem erstreckt, weiche mit der zentralen Leitung (8b) ein Volumen für die Zirkulation von Wasser begrenzt, und **dadurch**, dass in das Schwenkteil (11) einerseits eine allgemein rohrförmige Luftanschlussleitung (17) integriert ist, die sich zwischen den Luftleitungen (8a, 8b), des Fußes und der Stange erstreckt, und andererseits eine kammerförmige Wasseranschlussleitung (18) in weicher sich die Luftanschlussleitung (17) erstreckt und weiche sich zwischen den Wasserleitungen (7a, 7b) des Fußes und der Stange erstreckt,

7. Stützkonstruktion für eine Sprühdüse (für Sprühdüsen) nach einem der Ansprüche 1 bis 6, **dadurch gekennzeichnet, dass** das Gelenk (4) zwischen der Stange (2) und dem Fuß (3) von einer aus einem thermoplastischen Material hergestellten Verkleidung (5) bedeckt ist, die insbesondere die Bedeckung des oberen Abschnitts der Leitung oder der Leitungen (7a, 8a) des Fußes (3), die durch die Drehverbindungen (9) an das Schwenkteil (11) angeschlossen sind, sicherstellt.
